**Europäisches Patentamt**

**European Patent Office**

**Office européen des brevets**

(11) Veröffentlichungsnummer: **0 127 096 B1**

## (12) EUROPÄISCHE PATENTSCHRIFT

(45) Veröffentlichungstag der Patentschrift:
**09.12.87**

(21) Anmeldenummer: **84105738.3**

(22) Anmeldetag: **19.05.84**

(51) Int. Cl.⁴: **B 22 C 1/00**, B 22 C 1/20, B 22 C 1/22

(54) **Bindemittel auf der Basis wärmehärtbarer Phenol-Aldehyd-Harze mit einem Zusatz von Thermoplasten, insbesondere für Giessereizwecke.**

(30) Priorität: **28.05.83 DE 3319780**

(43) Veröffentlichungstag der Anmeldung:
**05.12.84 Patentblatt 84/49**

(45) Bekanntmachung des Hinweises auf die Patenterteilung:
**09.12.87 Patentblatt 87/50**

(84) Benannte Vertragsstaaten:
**DE FR GB IT**

(56) Entgegenhaltungen:
**DE - A - 2 428 547**
**DE - B - 1 102 979**
**DE - B - 2 700 763**
**DE - C - 2 349 598**
**US - A - 4 333 513**

(73) Patentinhaber: **Hüttenes-Albertus Chemische-Werke GmbH, Wiesenstrasse 23-64, D-4000 Düsseldorf-Heerdt 11 (DE)**

(72) Erfinder: **Erb, Wolfgang, Dr. rer.nat. Dipl.-Chem., Sandacker 6, D-4005 Meerbusch 3 (DE)**
Erfinder: **Schubert, Hans-Ulrich, Venloer Strasse 26, D-4130 Moers (DE)**

(74) Vertreter: **Eikenberg & Brümmerstedt Patentanwälte, Schackstrasse 1, D-3000 Hannover 1 (DE)**

## Beschreibung

Seit langem sind rieselfähige Formstoffe bekannt, bei denen ein körniger Formgrundstoff (meistens Quarzsand, aber auch Zirkonsand o.dgl.) mit einem wärmehärtbaren Kunstharz-Bindemittel umhüllt ist. Solche Formstoffe sind hauptsächlich für das Maskenformverfahren bestimmt, das insbesondere in der Giessereitechnik zur Herstellung dünnwandiger Formteile (z.B. Maskenformen und Kerne) Anwendung findet. Im Maskenformverfahren wird der Formstoff mit einem beheizten Formwerkzeug so zum Kontakt gebracht, dass das Bindemittel in der an der Werkzeugoberfläche anliegenden Formstoffschicht aushärtet und den körnigen Formgrundstoff zum fertigen Formteil bindet.

Als Bindemittel für diese Formstoffe sind Phenol-Aldehyd-Harze vom Novolak- und/oder Resol-Typ (nachfolgend kurz als «Phenolharze» bezeichnet) gebräuchlich, die im allgemeinen noch mit Härtungsmitteln, Beschleunigern, Gleitmitteln und/oder Trennmitteln versetzt sind. Bei Verwendung einfacher Phenolharze weist das mit den Formteilen abgegossene Gussstück jedoch häufig Fehler, insbesondere Blattrippen auf, so dass es zumindest nachbearbeitet, oft aber auch als Ausschuss verworfen werden muss. Die Hauptursache solcher Fehler ist darin zu sehen, dass diese Phenolharze ein verhältnismässig unelastisches Harzgerüst bilden, wodurch sich unter der hohen thermischen Belastung während des Giessens infolge der Wärmeausdehnung des Formgrundstoffes in den Formteilen erhebliche Spannungen einstellen können, die zum vorzeitigen Reissen der Formteile und damit zur Blattrippenbildung am Gussstück führen. Deshalb ist es üblich, die Phenolharze noch durch zusätzliche Massnahmen zu elastifizieren, beispielsweise indem die Phenolharze durch Einbau von alkylierten Phenolen (wie Kresolen, Xylenolen usw.) modifiziert werden oder indem ihnen geeignete Thermoplaste zugesetzt werden. Als derzeitig günstigste Praxis gilt eine Kombination von kresolmodifizierten Phenol-Novolaken mit einem in Petroleumkohlenwasserstoffen unlöslichen Wurzelharz, das aus der DE-B 11 02 979 bekannt ist.

Die bisher übliche Elastifizierung der Phenolharze vermag zwar der Blattrippen-Bildung entgegenzuwirken, hat jedoch andere Nachteile zur Folge. Da die dem Bindemittel zugesetzten Thermoplaste bei thermischer Belastung erweichen, neigen die Formteile während des Giessens zu Verformungen, wodurch die Masshaltigkeit der Gussstücke beeinträchtigt wird. Somit bedürfen die Gussstücke wiederum einer aufwendigen Nachbearbeitung oder sind wiederum Ausschuss.

Mit der Erfindung soll nunmehr ein verbessertes Bindemittel zur Verfügung gestellt werden, das auf wärmehärtbaren Phenol-Aldehyd-Harzen mit einem Zusatz an Thermoplasten basiert, aber die Nachteile der bekannten Bindemittel vermeidet und insbesondere eine erhöhte Wärmestabilität besitzt.

Dieses Ziel erreicht die Erfindung dadurch, dass das Phenol-Aldehyd-Harz einen Gehalt von weniger als 1 Gew.-% an freien Phenolen aufweist und als Zusatz ein in Petroleumkohlenwasserstoffen lösliches Balsamkolophonium in einer Menge von 1–21 Gew.-% enthält, wobei die Prozentangaben jeweils auf die gesamte Harzmenge bezogen sind. Vorzugsweise liegt dabei der Gehalt an freien Phenolen im Bereich von 0,2–0,6 Gew.-% und der Gehalt an dem Balsamkolophonium im Bereich von 4–16 Gew.-%.

Die Erfindung sieht somit zwei besondere Massnahmen vor, nämlich eine Senkung des freien Phenolgehalts auf sehr geringe Werte unter 1 Gew.-% (normalerweise besitzen Phenolharze einen freien Phenolgehalt in der Grössenordnung von 5 Gew.-%) in Verbindung mit dem Zusatz eines in Petroleumkohlenwasserstoffen löslichen Balsamkolophoniums, das sich von dem bekannten, in Petroleumkohlenwasserstoffen unlöslichen Wurzelharz deutlich unterscheidet und bisher für diesen Zweck noch nicht eingesetzt worden ist.

Damit erreicht die Erfindung gegenüber den bisher üblichen Phenolharzen eine so deutlich erhöhte Wärmestabilität, dass die bisher beobachteten Giessfehler, soweit sie auf die Phenolharze zurückzuführen sind, nahezu völlig vermieden werden können. Bei Einsatz des erfindungsgemässen Bindemittels zeigen die Gussstücke selbst bei hohen Giesstemperaturen von beispielsweise 1 450 °C weder eine Blattrippen-Bildung noch eine Beeinträchtigung ihrer Masshaltigkeit.

Dieser Erfolg der Erfindung war nach den bekannten Ergebnissen des Zusatzes von Wurzelharz zum Phenolharz nicht zu erwarten gewesen und beruht offenbar auf einem überraschenden Zusammenwirken der beiden das erfindungsgemässe Bindemittel bestimmenden Massnahmen. Es wurde gefunden, dass weder die Senkung des freien Phenolgehaltes für sich allein noch der Zusatz des Balsamkolophoniums für sich allein ausreicht, um den Erfolg der Erfindung herbeizuführen, und dass sich auch dann kein Erfolg ergibt, wenn ein auf einen freien Phenolgehalt unter 1 Gew.-% eingestelltes Phenolharz mit dem bekannten Wurzelharz kombiniert wird.

Aufgrund seiner guten Wärmestabilität ist das erfindungsgemässe Bindemittel nicht nur zur Herstellung rieselfähiger Formstoffe für das Maskenformverfahren geeignet, sondern kann überall dort eingesetzt werden, wo bei kunstharzgebundenen körnigen Materialien eine hohe Wärmestabilität verlangt wird. Typische weitere Einsatzbereiche für das erfindungsgemässe Bindemittel sind deshalb auch noch die Herstellung von Schleif- und Trennscheiben, Schleifpapieren, Brems- und Reibbelägen, Bremsscheiben u.dgl. Dieser grosse Einsatzbereich ist ein zusätzlicher besonderer Vorteil der Erfindung.

Geeignete Phenolkörper für die Phenolharz-Komponente des erfindungsgemässen Bindemittels sind solche, bei denen beide o-Stellungen oder eine o-Stellung und die p-Stellung zur Hydroxylgruppe nicht substituiert sind. Die übrigen C-Atome des Ringkörpers können wahlweise substituiert oder nicht substituiert sein. Falls sie substituiert sind, kommen als Substituenten beispielsweise Halogene, Hydroxylgruppen, Aminogruppen und substituierte Aminogruppen in Frage sowie Kohlenwasserstoffreste, vorzugsweise aliphatisch, mit bis zu 9 C-Atomen, die ihrerseits noch mit Hydroxylgruppen substituiert sein können.

Als Aldehydkomponente können die allgemein bekannten und zur Herstellung von Phenolharzen üblichen Aldehyde wie Formaldehyd, Acetaldehyd, Propionaldehyd, Butyraldehyd, Benzaldehyd, Furfural, Acrolein und ähnliche eingesetzt werden.

Das Molverhältnis der Phenolkörper zum eingesetzten Aldehyd ist keiner stöchiometrischen Beschränkung unterworfen, bevorzugt wird jedoch der Bereich 1:0,5–1,1 Mol Phenol zu Aldehyd. In jedem Fall muss jedoch sichergestellt sein, dass der Gehalt des Phenolharzes an freiem Phenol auf weniger als 1 Gew.-% eingestellt wird.

Die Kolophonium-Komponente des erfindungsgemässen Bindemittels ist bevorzugt ein naturbelassenes Balsamkolophonium mit einer Säurezahl zwischen 100 und 180 und einer Verseifungszahl zwischen 140 und 180. Der Erweichungspunkt kann zwischen 75 °C und 95 °C liegen und sollte nicht niedriger sein. Eine möglichst hohe Löslichkeit des Balsamkolophoniums in Petroleumkohlenwasserstoffen ist erwünscht, weil mit steigender Löslichkeit die Wirkung im Sinne der Erfindung besser wird.

Zur Herstellung des erfindungsgemässen Bindemittels kann ein Novolak mit einem Gehalt an freiem Phenol von weniger als 1 Gew.-% mit einem Kolophoniumharz gemischt werden. Zusätzlich oder alternativ kann das Kolophoniumharz aber auch bei der Kondensation des Phenolkörpers mit dem Aldehyd anwesend sein, so dass es in den Molekülverband eingebaut wird.

Das erfindungsgemässe Bindemittel kann je nach Anwendungsbereich sowohl in fester Form (Pulver, Flakes, Pastillen o.ä.) als auch in gelöster Form vorliegen. Als Lösungsmittel kommen solche in Frage, deren Siedepunkt unter 160 °C bei Normalbedingungen liegt. Als besonders geeignet haben sich die für Phenolharze gängigen Lösemittel, insbesondere niedere Alkohole, Ketone, Ester und/oder Wasser erwiesen.

Die Aushärtung des erfindungsgemässen Bindemittels erfolgt unter Verwendung eines zusätzlichen Härtungsmittels allein durch Wärmeeinwirkung. Bei Bedarf können zur Steuerung des Härtungsverlaufs, noch die üblichen sauren Härtungsbeschleuniger, wie Salicylsäure, Phenolsulfonsäure, Säureanhydride u.dgl. eingesetzt werden, indem sie dem Bindemittel zugegeben werden. Weiterhin ist auch die Zugabe von üblichen Trenn- und Gleitmitteln wie Calciumstearat, Amidwachsen, Siliconölen etc. möglich.

Nachfolgend wird die Erfindung anhand von Ausführungsbeispielen näher erläutert, wobei alle Prozentangaben als Gewichtsprozente zu verstehen sind.

Herstellung des Bindemittels
Beispiel 1 (Vergleichsbeispiel):
Phenolnovolak mit ca. 5% an freiem Phenol
In einer zur Herstellung von Kondensationsharzen üblichen Reaktionsanlage wurden 12 000 kg Phenol und 7 900 kg 37%iges Formalin auf 100 °C erwärmt. Sobald diese Temperatur erreicht war, wurden kontinuierlich 304,5 kg 3%ige Salzsäure so zudosiert, dass die Temperatur im Reaktor nicht über 103 °C hinausging. Nach Beendigung der Zugabe der Salzsäure wurde so lange bei Rückflusstemperatur nachkondensiert, bis der Gehalt an freiem Formaldehyd unter 0,5% lag. Danach wurde das Kondensat der Destillation unterworfen, bis der Gehalt an freiem Phenol bei 5% lag. Die Konfektionierung erfolgte in Pastillenform.

Beispiel 2 (Vergleichsbeispiel):
Modifizierter Phenolnovolak mit ca. 4% an freien Phenolen
Die in Beispiel 1 beschriebene Arbeitsweise wurde dahin abgewandelt, dass in der Kondensationsanlage 10 950 kg Phenol, 1 150 kg Kresolgemisch (bestehend aus 45–55% m-Kresol, 20–30% p-Kresol, 7,5–12,5% o-Kresol, Rest: Phenol) und 7 900 kg 37%iges Formalin vorgelegt wurden. Ansonsten wurde wie in Beispiel 1 vorgegangen. Der Gehalt des Kondensats an freien Phenolen betrug 4%, die Konfektionierung erfolgte in Pastillenform.

Beispiel 3 (Vergleichsbeispiel):
Modifizierter Phenolnovolak mit weniger als 1% freien Phenolen
Es wurde wie in Beispiel 2 vorgegangen. Nach Beendigung der Kondensationsphase wurde das Kondensat jedoch so lange der Destillation unterworfen, bis der Gehalt an freien Phenolen kleiner als 1% war. Die Konfektionieurng erfolgte in Pastillenform.

Beispiel 4 (Erfindungsgemässes Beispiel):
Modifizierter Phenolnovolak mit weniger als 1% freien Phenolen und mit 6,2% Kolophonium-Zusatz
Es wurde wie in Beispiel 3 vorgegangen. Nach Beendigung der Destillation wurden noch 750 kg portugiesisches Balsamharz WW in das Kondensat eingeschmolzen. Die Konfektionierung erfolgte in Pastillenform.

Beispiel 5 (Vergleichsbeispiel):
Modifizierter Phenol-Novolak mit 3,6% freien Phenolen und einem Zusatz von 6,2% Wurzelharz
Es wurde wie in Beispiel 2 vorgegangen. Nach Beendigung der Destillation wurden in die Schmelze 750 kg Vinsolharz (ein in Petroleumkohlenwasserstoff unlösliches Wurzelharz) eingearbeitet. Die Konfektionierung erfolgte in Pastillenform.

Beispiel 6 (Vergleichsbeispiel):
Phenolnovolak mit 4,5% freiem Phenol und einem Zusatz von Vinsol

Es wurde wie in Beispiel 1 vorgegangen. Nach Beendigung der Destillation wurden in die Schmelze 750 kg Vinsolharz eingearbeitet. Die Konfektionierung erfolgte in Pastillenform.

Beispiel 7 (Erfindungsgemässes Beispiel):
Modifizierter Phenol-Novolak mit weniger als 1% an freien Phenolen und mit 2,1% Kolophonium-Zusatz
Es wurde wie in Beispiel 3 vorgegangen. Nach Beendigung der Destillation wurden in die Schmelze 250 kg portugiesisches Balsamharz WW eingeschmolzen. Die Konfektionierung erfolgte in Pastillenform.

Beispiel 8 (Erfindungsgemässes Beispiel):
Modifizierter Phenol-Novolak mit weniger als 1% an freien Phenolen und mit 11,6% Kolophonium-Zusatz
Es wurde wie in Beispiel 3 vorgegangen. Nach Beendigung der Destillationsphase wurden in die Schmelze 1 500 kg portugiesisches Balsamharz WW eingeschmolzen. Die Konfektionierung erfolgte in Pastillenform.

Beispiel 9 (Erfindungsgemässes Beispiel):
Modifizierter Phenol-Novolak mit weniger als 1% an freien Phenolen und mit 6,2% Kolophonium-Zusatz wobei das Kolophoniumharz mit in den Molekülverband eingebaut ist.
Es wurde wie in Beispiel 3 vorgegangen, jedoch wurden dem Ansatz nach Erreichen des Trübungspunktes noch 750 kg portugiesisches Balsamharz WW zugesetzt. Die weitere Verarbeitung geschah wie in Beispiel 3. Die Konfektionierung erfolgte in Pastillenform.

Herstellung von Prüfkörpern
Mit den nach den Beispielen 1–9 erhaltenen Bindemitteln wurden rieselfähige Formstoff-Proben hergestellt, indem ein Prüfsand mit diesen Bindemitteln schmelzumhüllt wurde. Als Prüfsand diente reiner gewaschener Quarzsand MK 0,28 (korngerundet), der in einem Trockenofen auf 150 °C vorgewärmt war. Die Schmelzumhüllung erfolgte in einem Labor-Flügelmischer, wobei der Mischer mit einer aufgesetzten Quarzlampe von 1000 Watt Leistung bis zu einer Oberflächentemperatur von 100 °C–110 °C, am Mischflügel gemessen, erwärmt wurde.

In den Mischer wurden jeweils 3 000 g Sand eingegeben und mit 90 g der Bindemittel-Pastillen gemischt. Die Schmelzumhüllung des Sandes mit dem Bindemittel dauerte ca. 1 Minute. Dann wurden 32 g einer Lösung von 9 g Hexamethylentetramin in 23 g Wasser zugegeben, und es wurde ca. 3 Minuten lang bis zur Schollenbildung weitergemischt. Anschliessend wurden noch 6 g Calciumstearat zugesetzt, und der Mischvorgang wurde noch ca. 1 Minute lang bis zum Zerfallen der Mischung fortgesetzt.
Die so erhaltenen Formstoff-Proben wurden zum Erkalten auf einer Holzfläche mit Filterpapierauflage von ca. 500 × 500 mm ausgebreitet und dann einmal über ein Sieb 0,63 mm DIN 4188 gegeben.

Anschliessend wurden sie in einer Labor-Kernschiessmaschine bei 220 °C Schiesstemperatur, 5 bar Schiessdruck und 2 Minuten Standzeit zu Prüfkörpern weiterverarbeitet. Dabei wurden für jede Probe zwei unterschiedliche Prüfkörper hergestellt, nämlich solche mit einem quadratischen Querschnitt (165 × 22,4 × 22,4 mm) für die Prüfung der Kaltbiegefestigkeit und solche mit einem flachen rechteckigen Querschnitt (114 × 25,5 × 6,3 mm) für die Prüfung der Wärmebeständigkeit.

Bindemittel-Eigenschaften

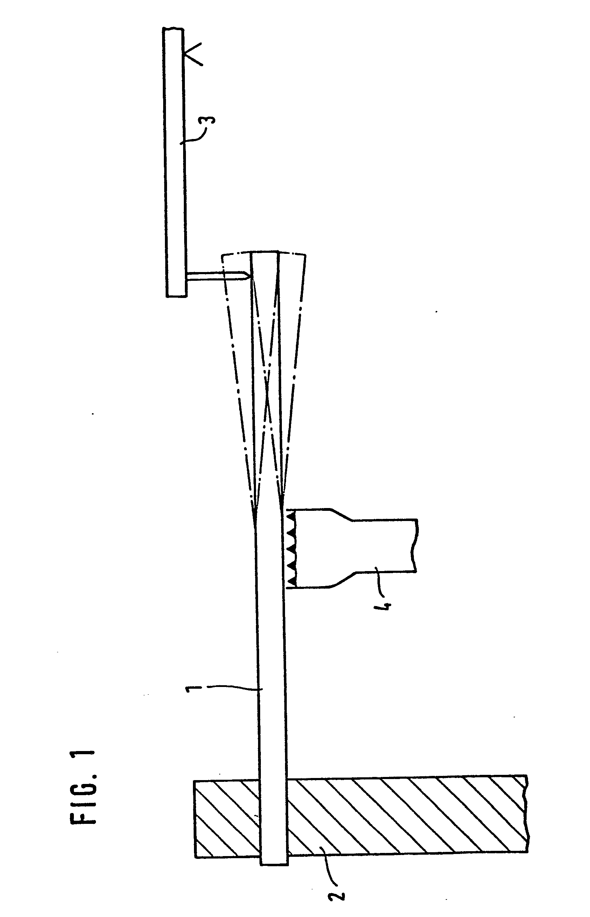

Die nach den Beispielen 1–9 erhaltenen Bindemittel und die damit hergestellten Formstoffe und Prüfkörper wurden zunächst auf die üblichen physikalischen und mechanischen Daten geprüft, wobei die Prüfung der Bindemittel nach DIN 16916, Teil 2 und die Prüfung der Formstoffe und Prüfkörper nach VDG-Merkblatt P 74 erfolgte. Die Ergebnisse der Prüfung sind in der Tabelle 1 zusammengefasst. Es ist zu erkennen, dass sich die Daten der erfindungsgemässen Bindemittel bzw. der damit hergestellten Formstoffe praktisch nicht von denen der Vergleichs-Bindemittel bzw. der damit hergestellten Formstoffe und Prüfkörper unterscheiden. Die mit der Erfindung erzielte Verbesserung der Wärmebeständigkeit hat also keine Verschlechterung anderer Daten zur Folge.
Für die Prüfung der Wärmebeständigkeit der Prüfkörper wurde das in Fig. 1 schematisch dargestellte Prüfgerät eingesetzt, das es gestattet, vergleichende Werte sowohl für die Verformbarkeit als auch das Reissverhalten der Prüfkörper unter Wärmeeifluss zu ermitteln.

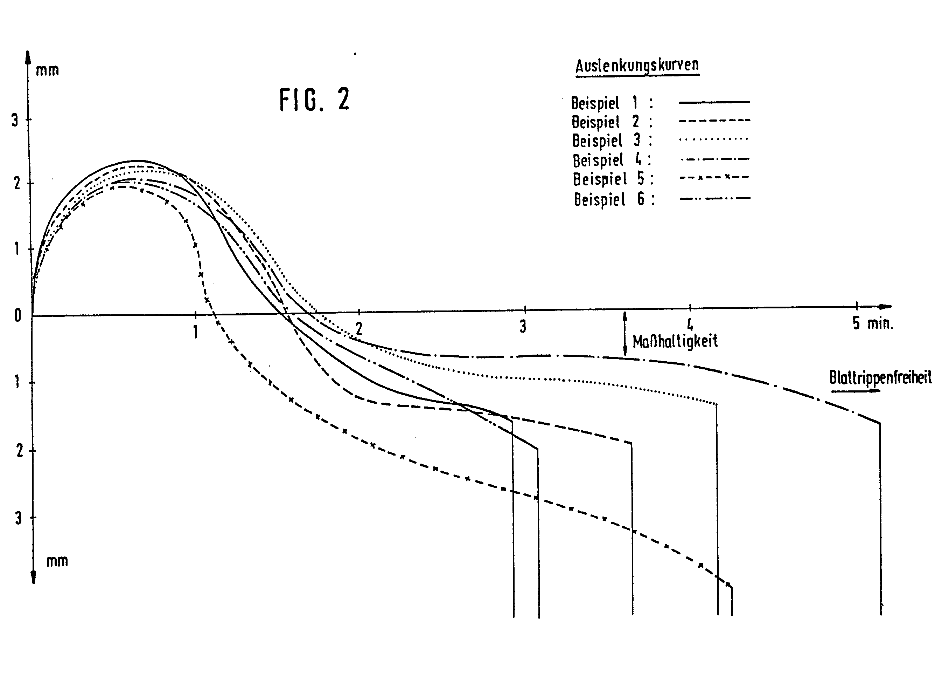

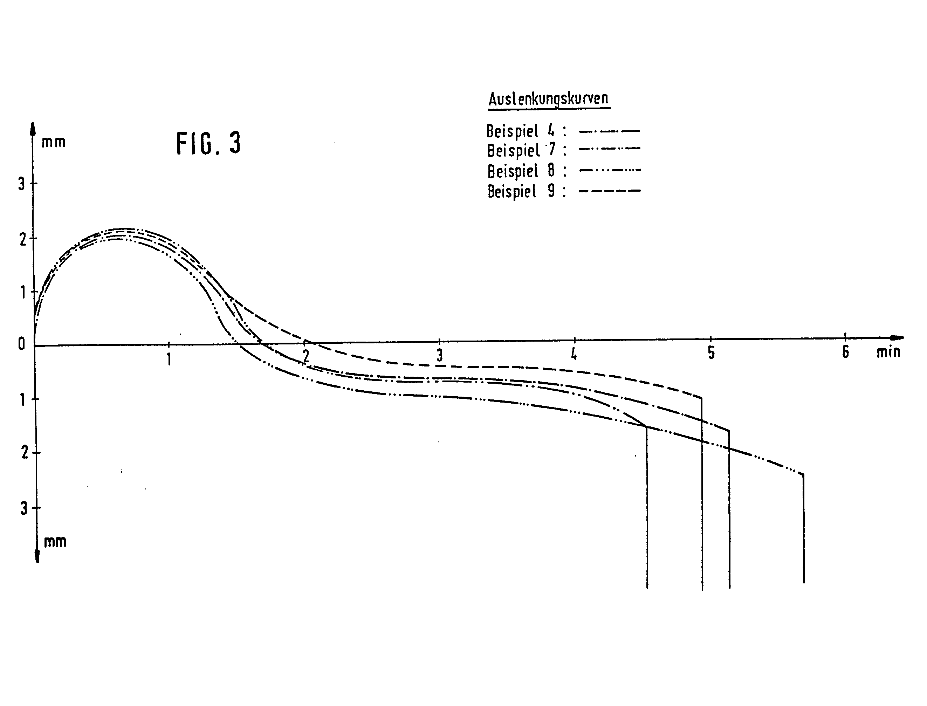

Bei dem Gerät gemäss Fig. 1 wird jeweils einer der dafür vorgesehenen Prüfkörper 1 in flacher Lage mit seinem einen Ende in eine Halteklammer 2 eingespannt, an seinem freien anderen Ende mit einem Messfühler 3 beaufschlagt und in seinem mittleren Bereich mittels eines Gasbrenners 4 erhitzt. Bei Beginn der Erhitzung erfolgt zunächst eine Auslenkung des freien Endes des Prüfkörpers nach oben, weil der Prüfkörper im Erhitzungsbereich noch ein Temperaturgefälle von unten nach oben besitzt. Sobald die Temperatur im Erhitzungsbereich im wesentlichen gleichmässig geworden ist, senkt sich das freie Ende des Prüfkörpers auf Werte unterhalb der Ausgangsposition bei kaltem Prüfkörper ab, bis bei weiter fortschreitender Erhitzung ein Bruch des Prüfkörpers im Erhitzungsbereich eintritt. Gemessen wird die Zeitkurve der Auslenkung des freien Endes des Prüfkörpers und die Zeitdauer bis zum Bruch.
Die auf diese Weise ermittelten Werte sind in der Tabelle 2 zusammengefasst und wegen der besseren Anschaulichkeit auch noch in den Fig. 2 und 3 graphisch dargestellt. Dabei sind Abstand und Neigung der Kurven unterhalb der Abszisse ein Mass für die thermische Verformbarkeit des Prüfkörpers und damit für die Masshaltigkeit der Gussstücke, während die Zeitdauer bis zum Bruch ein Mass für die Reisstendenz des Prüfkörpers und damit für die Blattrippen-Bildung am Gussstück ist.

In der Fig. 2 ist das erfindungsgemässe Beispiel 4 den fünf Vergleichsbeispielen gegenübergestellt. Es ist zu erkennen, dass die Auslenkungskurve für Beispiel 4 mit geringem Abstand sehr flach und lange unterhalb der Abszisse verläuft und auch erst spät durch Bruch endet. Bei den Vergleichsbeispielen tritt der Bruch des Prüfkörpers erheblich früher ein, wobei zu berücksichtigen ist, dass Unterschiede in der Grössenordnung einer Minute schon erhebliche Bedeutung haben, weil in der Praxis nur dann Blattrippen am Gussstück entstehen, wenn das Formteil vor Ausbildung einer ausreichenden Gusshaut reisst. Auch der Verlauf der Auslenkungskurven ist bei den Vergleichsbeispielen schlechter als beim Beispiel 4, und vor allem die Kurven für die Beispiele 5 und 5, die dem derzeitigen Stand der Technik entsprechen, zeigen erwartungsgemäss eine stark abfallende Tendenz. Insgesamt veranschaulicht somit die Fig. 2 die deutliche Überlegenheit der Erfindung sowohl hinsichtlich der Verformbarkeit als auch hinsichtlich der Reisstendenz der damit hergestellten Formteile.

Die Fig. 3 zeigt die Kurven der vier erfindungsgemässen Beispiele und macht ersichtlich, dass sich durch Variation der Zusammensetzung des Bindemittels innerhalb des erfindungsgemässen Bereichs die Verformbarkeit und die Reisstendenz beeinflussen lassen, das Bindemittel also an praktische Erfordernisse angepasst werden kann.

*Tabelle 1*
Kenndaten der Phenolharze

| Beispiel | 1 | 2 | 3 | 4 | 5 | 6 | 7 | 8 | 9 |
|---|---|---|---|---|---|---|---|---|---|
| Schmelzbereich (°C) | 72–86 | 73–85 | 77–83 | 74–81 | 72–82 | 70–82 | 73–84 | 71–79 | 77–86 |
| Fliessstrecke (mm) | 85 | 81 | 67 | 66 | 77 | 84 | 74 | 69 | 63 |
| freie Phenole (%) | 5 | 4 | 0,7 | 0,8 | 3,6 | 4,5 | 0,9 | 0,7 | 0,5 |
| Viskosität (Pa.s/120 °C) | 12,9 | 14,1 | 14,9 | 11,1 | 10,3 | 10,3 | 11,7 | 16,4 | 19,0 |

Kenndaten der Formstoffmischungen

| Beispiel | 1 | 2 | 3 | 4 | 5 | 6 | 7 | 8 | 9 |
|---|---|---|---|---|---|---|---|---|---|
| Schmelzpunkt (°C) | 96 | 97 | 99 | 97 | 97 | 95 | 95 | 100 | 104 |
| Kaltbiege-Festigkeit (N/cm²) | 1140 | 1070 | 1190 | 1230 | 1180 | 1160 | 1160 | 1090 | 1090 |
| Glühverlust (%) | 3,47 | 3,40 | 3,39 | 3,44 | 3,51 | 3,52 | 3,48 | 3,38 | 3,51 |
| Schüttdichte (g/l) | 1540 | 1490 | 1520 | 1520 | 1510 | 1480 | 1510 | 1520 | 1480 |

*Tabelle 2*
Auslenkung der Probekörper

| Beispiel | Zeit in Minuten | | | | | | | | | | |
|---|---|---|---|---|---|---|---|---|---|---|---|
| | 0,5 | 1 | 1,5 | 2 | 2,5 | 3 | 3,5 | 4 | 4,5 | 5 | 5,5 |
| 1 | +2,3 | +1,9 | +0,05 | −0,95 | −1,35 | * | | | | | |
| 2 | +2,20 | +2,0 | −0,35 | −1,3 | −1,45 | −1,65 | −1,9 | * | | | |
| 3 | +2,15 | +2,0 | +0,75 | −0,4 | −0,85 | −1,0 | −1,1 | −1,3 | * | | |
| 4 | +2,0 | +1,8 | +0,5 | −0,4 | −0,65 | −0,7 | −0,75 | −0,85 | −1,2 | −1,6 | * |
| 5 | +1,9 | +1,25 | −1,15 | −1,9 | −2,4 | −2,75 | −3,15 | −3,75 | * | | |
| 6 | +2,0 | +1,65 | +0,2 | −0,65 | −1,25 | −1,9 | * | | | | |
| 7 | +2,1 | +1,9 | +0,7 | −0,4 | −0,7 | −0,75 | −0,8 | −1,0 | −1,6 | * | |
| 8 | +1, | +1,65 | 0 | −0,65 | −0,95 | −1,05 | −1,15 | −1,35 | −1,6 | −1,95 | −2,35 |
| 9 | +2,05 | +1,85 | +0,8 | −0,05 | −0,35 | −0,45 | −0,5 | −0,6 | −0,8 | * | |

Beispiel 1 nach 2,92 Minuten
Beispiel 2 nach 3,64 Minuten
Beispiel 3 nach 4,16 Minuten
Beispiel 4 nach 5,14 Minuten
Beispiel 5 nach 4,24 Minuten

Beispiel 6 nach 3,08 Minuten
Beispiel 7 nach 4,54 Minuten
Beispiel 8 nach 5,66 Minuten
Beispiel 9 nach 4,94 Minuten

## Patentansprüche

1. Bindemittel auf der Basis wärmehärtbarer Phenol-Aldehyd-Harze mit einem Zusatz von Thermoplasten, insbesondere für Giessereizwecke, dadurch gekennzeichnet, dass das Phenol-Aldehyd-Harz einen Gehalt von weniger als 1 Gew.-% an freien Phenolen aufweist und als Zusatz ein in Petroleumkohlenwasserstoffen lösliches Balsamkolophonium in einer Menge von 1–21 Gew.-% enthält, wobei die Prozentangaben jeweils auf die gesamte Harzmenge bezogen sind.

2. Bindemittel nach Anspruch 1, dadurch gekennzeichnet, dass der Gehalt des Phenol-Aldehyd-Harzes an freien Phenolen im Bereich von 0,2–0,6 Gew.-% und der Gehalt an dem Balsamkolophonium im Bereich von 4–16 Gew.-% liegt.

3. Bindemittel nach Anspruch 1 oder 2, dadurch gekennzeichnet, dass Phenol-Aldehyd-Harz ein Harz vom Novolak-Typ ist.

4. Bindemittel nach Anspruch 3, dadurch gekennzeichnet, dass das Phenol-Aldehyd-Harz mit alkylierten Phenolen modifiziert ist.

5. Bindemittel nach einem der Ansprüche 1–4, dadurch gekennzeichnet, dass das Balsamkolophonium dem Phenol-Aldehyd-Harz zugemischt ist.

6. Bindemittel nach einem der Ansprüche 1–5, dadurch gekennzeichnet, dass das Balsamkolophonium in das Phenol-Aldehyd-Harz einkondensiert ist.

## Revendications

1. Liant à base de résines aldéhydo-phénoliques thermodurcissables avec addition de thermoplastiques, notamment pour l'utilisation en fonderie, caractérisé en ce que la résine aldéhydophénolique a une teneur en phénols libres de moins de 1% en poids et qu'il contient, comme additif, une colophane balsamique soluble dans des hydrocarbures de pétrole en quantité allant de 1 à 21% en poids, les pourcentages se rapportant chaque fois à la quantité totale de résine.

2. Liant suivant la revendication 1, caractérisé en ce que la teneur de la résine aldéhydo-phénolique en phénols libres est dans la plage allant de 0,2 à 0,6% en poids et la teneur en colophane balsamique dans plage allant de 4 à 16% en poids.

3. Liant suivant la revendication 1 ou 2, caractérisé en ce que la résine aldéhydo-phénolique est une résine du type novolaque.

4. Liant suivant la revendication 3, caractérisé en ce que la résine aldéhydo-phénolique est modifiée par des phénols alcoylés.

5. Liant suivant l'une des revendications 1 à 4, caractérisé en ce que la colophane balsamique est mélangée avec la résine aldéhydo-phénolique.

6. Liant suivant l'une des revendications 1 à 5, caractérisé en ce que la colophane balsamique est condensée dans la résine aldéhydo-balsamique.

## Claims

1. Binder based on thermosetting phenol-aldehyde resins with added thermoplastic materials, particularly for foundry purposes, characterised in that the phenol-aldehyde resin has a content of less than 1% by weight of free phenols and contains as an additive and soluble in petroleum hydrocarbons, a balsam colophonium in a quantity of 1 to 21% by weight, the percentages always being related to the total quantity of resin.

2. Binder according to Claim 1, characterised in that the free phenol content in the phenol-aldehyde resin lies in the range from 0.2 to 0.6% by weight, while the content of balsam colophonium lies in the range from 4 to 16% by weight.

3. Binder according to Claim 1 or 2, characterised in that the phenol-aldehyde resin is a resin of the Novolak type.

4. Binder according to Claim 3, characterised in that the phenol-aldehyde resin is modified by alkylated phenols.

5. Binder according to one of Claims 1 to 4, characterised in that the balsam colophonium is admixed with the phenol-aldehyde resin.

6. Binder according to one of Claims 1 to 5, characterised in that the balsam colophonium is condensed into the phenol-aldehyde resin.

FIG. 1

FIG. 2

Auslenkungskurven

Beispiel 1 :
Beispiel 2 :
Beispiel 3 :
Beispiel 4 :
Beispiel 5 :
Beispiel 6 :

Maßhaltigkeit

Blattrippenfreiheit

0 127 096

FIG. 3

Auslenkungskurven

Beispiel 4 : —·——·——
Beispiel 7 : —··——··——
Beispiel 8 : —···——···—
Beispiel 9 : ————

3/3

0 127 096